# EUROPEAN PATENT SPECIFICATION

(11) **EP 4 388 385 B1**
(45) Date of publication and mention of the grant of the patent: **22.07.2026**
(21) Application number: 22769433.8
(22) Date of filing: 16.08.2022
(51) Int. Cl.: G06F 1/18, H01R 12/70, H01R 43/26, H05K 7/14, G06F 1/183, H01R 13/518

(54) **CONNECTOR SYSTEM FOR CONNECTING PROCESSOR SYSTEMS AND RELATED METHODS**
VERBINDERSYSTEM ZUM VERBINDEN VON PROZESSORSYSTEMEN UND ZUGEHÖRIGE VERFAHREN
SYSTÈME DE CONNECTEUR POUR CONNECTER DES SYSTÈMES DE PROCESSEUR ET PROCÉDÉS ASSOCIÉS

(30) Priority: 18.08.2021 US 202163260389 P
(43) Date of publication of application: 26.06.2024
(73) Proprietor: Tesla, Inc., Austin, TX 78725 (US)
(72) Inventor: LI, Yong guo, Austin, Texas 78725 (US); GROEN, Peter, Austin, Texas 78725 (US); BHANDARI, Rishabh, Austin, Texas 78725 (US); NABOVATI, Aydin, Austin, Texas 78725 (US); ZHANG, Xuyang, Austin, Texas 78725 (US)
(74) Representative: Liesegang, Eva
(86) International application number: PCT/US2022/040420
(87) International publication number: WO 2023/023025

(56) References cited:
- WO-A1-2017/126186
- US-A1- 2008 026 625
- US-A1- 2018 277 991
- US-A1- 2018 376 608
- US-B1- 10 958 014

## Description

### TECHNICAL FIELD

The present disclosure relates generally to electronic assemblies and methods of manufacturing the same.

### BACKGROUND

A system on a wafer (SoW) assembly can include a SoW and a heat dissipation structure coupled to the SoW. Voltage regulating modules (VRMs) and a thermal interface material can be included between the heat dissipation structure and the SoW. A typical SoW may include a plurality of connections. There can be technical challenges associated with connecting SoWs together with each other in tight spaces.

US 2018/0277991 A1 discloses an interface apparatus in which, when a load is applied to a base member and a connector part is pushed onto an external connector, a spring contracts so that an interval between the base member and a holder is reduced. An inclined surface of a coupling member is separated from an inclined surface of the holder so that fixing of the holder by the coupling member is released and the coupling member can move freely inside a hollow section. As a result, the holder and the connector part can move freely in X-Y directions relative to the base member, and a terminal of a connector can be finely adjusted in the X-Y direction, thus being precisely aligned with the external connector.

### SUMMARY OF CERTAIN INVENTIVE ASPECTS

The invention is defined in the claims.

In one aspect, a connector system is disclosed. The connector system comprises a support structure; a holder configured to receive a first connector of a connection line, the holder coupled to the support structure; a first alignment structure configured to provide alignment between the first connector and a second connector of a processing system with an alignment tolerance on an order of a millimeter; an alignment adjustment structure comprising a spring, the alignment adjustment structure configured to compensate for the alignment tolerance between the first connector and the second connector, the alignment adjustment structure compressible along a first axis and movable along a second axis different from the first axis, the alignment adjustment structure positioned between the support structure and the holder; a datum structure including a fastener positioned in an opening of a frame supported by the support structure, the fastener coupling the frame with the holder, wherein the fastener comprises a slanted or stepped head portion and a shank portion, the shank portion extending into the spring such that the shank portion is partially surrounded by the spring, the spring configured to release datum of the datum structure in response to being compressed along the first axis; and an actuator configured to provide movement of the holder so as to connect the first connector to the second connector of the processing system.

In one embodiment, the second axis is substantially perpendicular to the first axis.

In one embodiment, the alignment adjustment structure is movable along a plane parallel with the second axis.

In one embodiment, the connector system includes an array of holders including the holder, and an array of alignment adjustment structures including the alignment adjustment structure. Each alignment adjustment structure of the array of alignment adjustment structures is associated with a respective holder of the array of holders.

In one embodiment, the connector system further includes a second holder that is configured to receive a third connector of a second connection line. The second holder can be coupled to the support structure. The actuator can be configured to provide movement of the second holder so as to connect the second connector to a fourth connector of the processing system.

In one embodiment, the connector system further includes an alignment pin that is configured to provide alignment between the first connector and the second connector of the processing system with an alignment tolerance on an order of a millimeter. The alignment adjustment structure is configured to compensate for the alignment tolerance between the first and second connectors.

In one embodiment, the alignment adjustment structure includes a metal lattice fringe.

In one embodiment, the alignment adjustment structure includes rubber.

In one aspect, a multi-cabinet computing system is disclosed. The multi-cabinet computing system can include a first cabinet having a first plurality of processing systems including a first processing system, a second cabinet having a second plurality of processing systems including a second processing system, and a connector system that is configured to connect the first processing system and the second processing system by way of a plurality of connection lines. The connector system includes a connector holder as described above.

In one embodiment, the first processing system comprises a system on wafer (SoW) assembly.

In one embodiment, the alignment adjustment structure comprises a spring. The multi-cabinet computing system further includes a datum structure including a fastener inserted into an opening of a frame that is supported by the support structure. The fastener couples the frame with the holder. The spring can be configured to release datum of the datum structure in response to being compressed along the first axis. The fastener can include a slanted head portion and a shank portion. At least portion of the opening of the frame can be shaped to accommodate the slanted head portion of the fastener. The fastener can include a stepped head portion and a shank portion. At least portion of the opening of the frame can be shaped to accommodate the stepped head portion of the fastener.

In one embodiment, the multi-cabinet computing system further includes an alignment pin that is configured to provide alignment between the connector of the connection line and the connector of the first processing system with an alignment tolerance on an order of a millimeter. The alignment adjustment structure is configured to compensate for the alignment tolerance between the connector of the connection line and the connector of the first processing system.

In one embodiment, the first and second processing systems are included in a distributed processing system that is configured to perform neural network training.

In one aspect, a method of connecting a first computing system of a first cabinet and a second computing system of a second cabinet through a connection line is disclosed. The method can include providing a first connector system holding a first connector of the connection line; and actuating the first connector system to connect the first connector of the connection line to a second connector of the first computing system of the first cabinet, wherein the first connector system comprises: a support structure; a connector holder that holds the first connector of the connection line and is coupled to a frame, a first alignment structure providing alignment between the first connector and the second connector of a processing system with an alignment tolerance on an order of a millimeter, an alignment adjustment structure between the connector holder and the frame, the alignment adjustment structure comprising a spring, the alignment adjustment structure compensating for the alignment tolerance between the first connector and the second connector, and a datum structure including a fastener positioned in an opening of a frame supported by the support structure, the fastener coupling the frame with the connector holder, wherein the fastener comprises a slanted or stepped head portion and a shank portion, the shank portion extending into the spring such that the shank portion is partially surrounded by the spring, the spring configured to release datum of the datum structure in response to being compressed along a first axis; and wherein said actuating causes the alignment adjustment structure to compress along the first axis and move the connector holder along a second axis different from the first axis.

In one embodiment, the method further includes providing a second connector system holding a third connector of the connection line, and actuating a second connector system to connect the third connector of the connection line to a fourth connector of the second computing system of the second cabinet.

### BRIEF DESCRIPTION OF THE DRAWINGS

Specific implementations will now be described with reference to the following drawings, which are provided by way of example, and not limitation.
Figure 1 shows a schematic cross sectional side view of a processing system.
Figure 2 is a schematic perspective view of a portion of a processing system according to an embodiment.
Figure 3 is a schematic perspective view of an interposer assembly.
Figure 4 is a top plan view showing a plurality of the interposer assemblies disposed over a system on wafer (SoW).
Figure 5 is a schematic perspective view of a connector (e.g., a male connector) of a connection line that is coupled to a holder.
Figure 6A is a schematic side view of a connector system that is fixed to a cabinet bracket in a first state.
Figure 6B is a schematic side view of the connector system that is fixed to the cabinet bracket in a second state different from the first state.
Figure 6C is a schematic perspective view of the connector system in the second state with a connection line.
Figure 7A is a schematic side view of an alignment pin that is coupled to the connector holder frame.
Figure 7B is a schematic side view of the connector coupled to the holder.
Figures 8A-8C show various steps in a method of connecting a connector of a connection line to a corresponding connector.
Figures 8D and 8E show examples of a datum structure.
Figures 8F and 8G show another example of a datum structure.
Figure 9 is a schematic perspective view of the connector holder frame.
Figure 10A shows a connector system and a processor system prior to connecting a connector of a connection line to a connector of the processor system.
Figure 10B shows the connector system and the processor system after connecting the connector of the connection line to the connector of the processor system.
Figure 11A shows a view of a flexure as an example of the alignment adjustment structure.
Figure 11B shows another view of the flexure.
Figure 12A is a schematic perspective view of an elastic pyramid as an example of the alignment adjustment structure.
Figure 12B is a schematic side view of an elastic cylinder as an example of the alignment adjustment structure.
Figure 13A shows a schematic perspective view of a first cabinet and a second cabinet with a plurality of connector systems.
Figure 13B shows an enlarged view of a portion of Figure 13A.
Figure 13C is a schematic side view of the first and second cabinets.
Figure 13D is an enlarged view of a portion of Figure 13C with a support rack illustrated therein.

### DETAILED DESCRIPTION OF CERTAIN EMBODIMENTS

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

High performance distributed processing systems can include a plurality of processing systems in different cabinets that are connected to each other. Each cabinet can include an array of processing systems. Some approaches to connecting processing systems in different cabinets involve having connectors on a single side of the cabinet so that all connectors can be accessed from one side of the cabinet. While such approaches can allow for users to manually change connections and facilitate certain system maintenance, having all connections on one side of a cabinet can result in a performance hit for the distributed processing system. For example, with all connectors on one side of a cabinet, connector lines between cabinets can add delay relative to the shortest physical path between processing systems of different cabinets.

Aspects of this disclosure relate to connector systems that enable short connections between processing systems in tight spaces. Such connector systems can facilitate connection and disconnecting for maintenance in areas where there is not sufficient space for a user to manually adjust connections. Connector systems disclosed herein can facilitate connections between processing systems on a plurality of sides of a cabinet to enable short connections between processing systems in different cabinets. This can reduce length of connector lines and improve performance in high performance distributed computing applications. Connector systems disclosed herein can connect a relatively large number of connectors within a small alignment tolerance. With technology disclosed herein, connectors can be connected within a mismatch tolerance that is about two orders of magnitude less than a cabinet to cabinet variation tolerance.

In multi-cabinet computing systems, there can be a tolerance variation on the order of 10s of millimeters between cabinets. There can be an allowable connector mismatch on the order of 0.1 millimeter to facilitate connections between connectors for connecting computing systems in different cabinets. Connector systems disclosed herein can include alignment structures that go from an initial alignment mismatch on the order of 10s of millimeters and align connectors within a mismatch tolerance on the order of 0.1 millimeter.

Embodiments disclosed herein relate to a connector system for connecting two or more systems, such as a system on a wafer (SoW) assembly to another system, or one or more other SoW assemblies. In some embodiments, the connector system can connect systems within different cabinets. The connector system can enable connections between systems that are positioned across a cabinet wall. The connectors of the systems may not be easily accessible by a human. The connector systems disclosed herein can enable the systems to be connected and disconnected without a human being physically present at the connection site.

The connector systems can include alignment structures that facilitate alignment of two connectors (e.g., a male connector with a female connector). A motor can drive the connector system. The alignment structures include a first alignment structure (e.g., an alignment pin or hole) that generally align the positions of a male connector with a female connector, and a second alignment structure that can provides precise alignment between the male connector and the female connector. The second alignment structure can adjust the alignment between the male connector and the female connector in three dimensions. For example, the second alignment structure can float in horizontal directions (e.g., along an x-y plane) and be compressible in a vertical direction (e.g., along a z-axis). The second alignment structure can be coupled to a holder that holds a connector that is configured to connect to another connector.

SoW assemblies can include a SoW and a cooling system that is coupled to the SoW. The SoW can include an array of integrated circuit dies. The SoW assembly can include an array of electronic modules, such as voltage regulating modules (VRMs), positioned between the SoW and the cooling system. A typical SoW assembly can include a number of connectors and disconnectors that may need to be serviced to mount or dismount individual components, such as wafers.

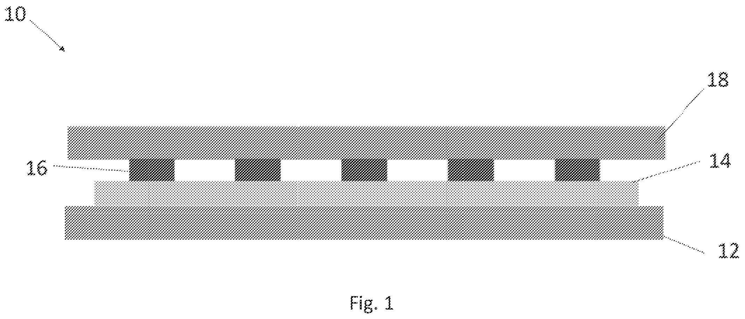

Figure 1 shows a schematic cross sectional side view of a processing system 10. The processing system 10 is an example processing system that can be connected by connector systems disclosed herein. The processing system 10 can comprise a system on a wafer (SoW) assembly. The processing system 10 can have a high compute density and can dissipate heat generated by the processing system 10. The processing system 10 can execute trillions of operations per second in certain applications. The processing system 10 can be used in and/or specifically configured for high performance computing and/or computation intensive applications, such as neural network training and/or processing, machine learning, artificial intelligence, or the like. The processing system 10 can implement redundancy. In some applications, the processing system 10 can be used to generate data for an autopilot system of a vehicle (e.g., an automobile) or the like.

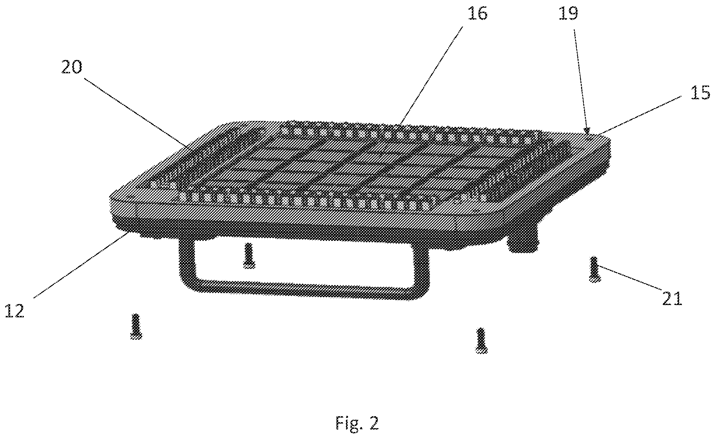

Figure 2 is a schematic perspective view of a portion of a processing system 10 according to an embodiment. The processing system 10 shown in Figure 2 can share various components of the processing system 10 illustrated in Figure 1.

As illustrated in Figure 1, the processing system 10 includes a cooling component 12, a SoW 14, voltage regulating modules (VRMs) 16, and a cooling system 18. As illustrated in Figure 2, the processing system 10 includes a cooling component 12, a frame structure 15, voltage regulating modules (VRMs) 16, and interposer assemblies 20.

The cooling component 12 can cool the SoW 14. The cooling component 12 can be any suitable component to dissipate heat, remove heat, or otherwise reduce temperature of components of a processing system during operation. The cooling component 12 can include a heat spreader. Such a heat spreader can include a metal plate. Alternatively or additionally, the cooling component 12 can include a heat sink. The cooling component 12 can include any suitable material with desirable heat dissipation properties. In some instances, the cooling component 12 can include a cold plate arranged to have coolant flow therethrough for active cooling. A thermal interface material can be included between the cooling component 12 and the SoW 14 to reduce and/or minimize heat transfer resistance.

The SoW 14 can include an array of integrated circuit (IC) dies. The IC dies can be embedded in a molding material. The SoW 14 can have a high compute density. The IC dies can be semiconductor dies, such as silicon dies. The array of IC dies can include any suitable number of IC dies. For example, the array of IC dies can include 16 IC dies, 25 IC dies, 36 IC dies, or 49 IC dies. The SoW 14 can be an Integrated Fan-Out (InFO) wafer, for example. InFO wafers can include a plurality of routing layers over an array of IC dies. For example, an InFO wafer can include 4, 5, 6, 8, or 10 routing layers in certain applications. The routing layers of the InFO wafer can provide signal connectivity between the ICs dies and/or to external components. The SoW 14 can have a relatively large diameter, such as a diameter in a range from 10 inches to 15 inches. As one example, the SoW 14 can have a 12 inch diameter.

The frame structure 15 can contribute to the structural integrity of the processing system 10. The frame structure 15 can provide support to the VRMs 16 and keep the VRMs 16 in place.

The VRMs 16 can be positioned such that each VRM is stacked with an IC die of the SoW 14. In the processing system 10, there is high density packing of the VRMs 16. Accordingly, the VRMs 16 can consume significant power. The VRMs 16 are configured to receive a direct current (DC) supply voltage and supply a lower output voltage to a corresponding IC die of the SoW 14.

The cooling system 18 can provide active cooling for the VRMs 16. The cooling system 18 can include metal with flow paths for heat transfer fluid to flow through. In the assembled processing system 10, the cooling system 18 can be bolted to the cooling component 12. This can provide structural support for the SoW 14 and/or can reduce the chance of the SoW 14 breaking.

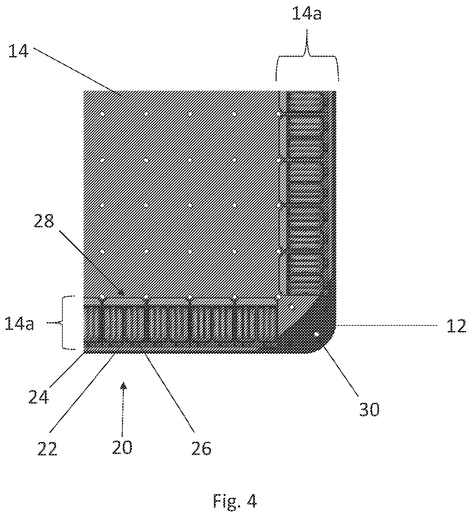

The cooling component 12 can be coupled with the frame structure 15 by way of at least one fastener, such as one or more screws 21. The screws 21 can be provided through respective holes 30 (see Figure 4) of the cooling component 12 and respective holes 19 of the frame structure 15 to couple the cooling component 12 with the frame structure 15.

The cooling component 12 and/or the frame structure 15 can comprise an alignment structure for horizontally aligning the position of the cooling component 12 relative to the frame structure 15.

The interposer assemblies 20 can be positioned at edge regions of the processing system 10. In some embodiments, one or more arrays of the interposer assemblies 20 can be positioned laterally around the VRMs 16. For example, at each side of the processing system 10, interposer assemblies 20 each having two connectors can be positioned laterally around the VRMs 16. The interposer assemblies 20 can have input/output connectors accessible thought openings of the frame structure 15. As illustrated, a relatively high density of connectors can be achieved with the interposer assemblies 20. The interposer assembly 20 can provide interface routing between the processing system 10 and another processing system or an external device.

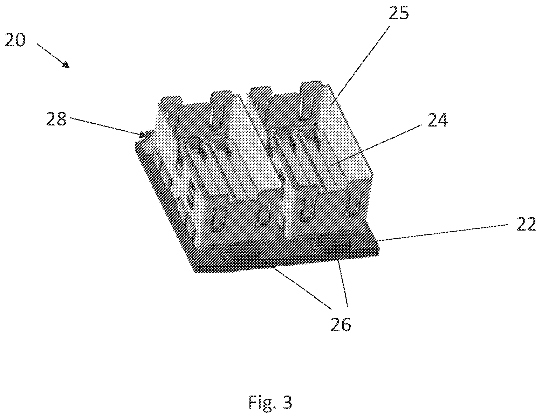

Figure 3 is a schematic perspective view of an interposer assembly 20. The interposer assembly 20 can include a carrier 22, one or more connectors 24 coupled to the carrier 22, and one or more surface mount components 26 mounted on the carrier 22. The interposer assembly 20 can include a connector housing 25. In some embodiments, the connector 24 can comprise a female connector, and the connector housing 25 can configure to guide a male connector (not shown) to connect to the connector 24. The interposer assembly 20 can provide interfacing routing between the processing system 10 and another processing system or an external device. For example, an array of processing systems 10 can be connected to each other via interposer assemblies 20. In some embodiments, the connectors 24 can comprise high speed connectors that are configured as input/output connectors for the processing system 10. Such connectors can have high throughput. In some instances, connectors 24 can carry a differential pair of signals. The one or more surface mount components 26 can include, for example, a surface mount capacitor, a surface mount inductor, or a surface mount capacitor and a surface mount inductor. The carrier 22 can comprise an interposer printed circuit board (PCB). The carrier 22 can have an area 28 that is configured to receive force applied to the carrier 22. The area 28 of the carrier 22 can be free from electronic components.

Figure 4 is a top plan view showing a plurality of the interposer assemblies 20 disposed over the SoW 14. The SoW 14 is disposed on the cooling component 12. The interposer assemblies 20 can be positions at or near edge regions 14a of the SoW 14. Accordingly, the interposer assemblies 20 can be positioned along a periphery or perimeter of the SoW 14. The SoW 14 can include integrated circuit dies (not shown in Figure 4) underneath the interposer assemblies 20. Pressure in a particular range can be applied to the integrated circuit dies for achieving sufficient thermal performance, for example, as described below.

The cooling component 12 can include an alignment hole 30. In some embodiments, the cooling component 12 can include the alignment hole 30 at each corner of the cooling component 12.

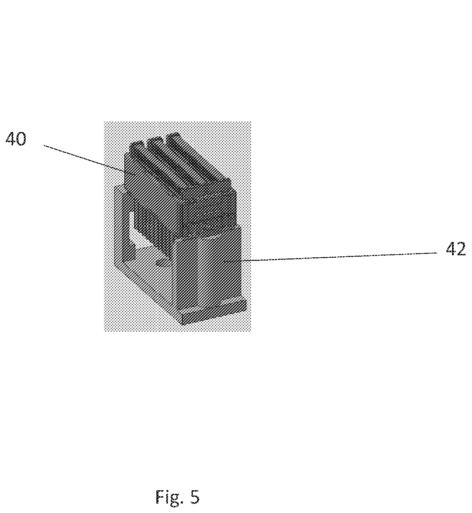

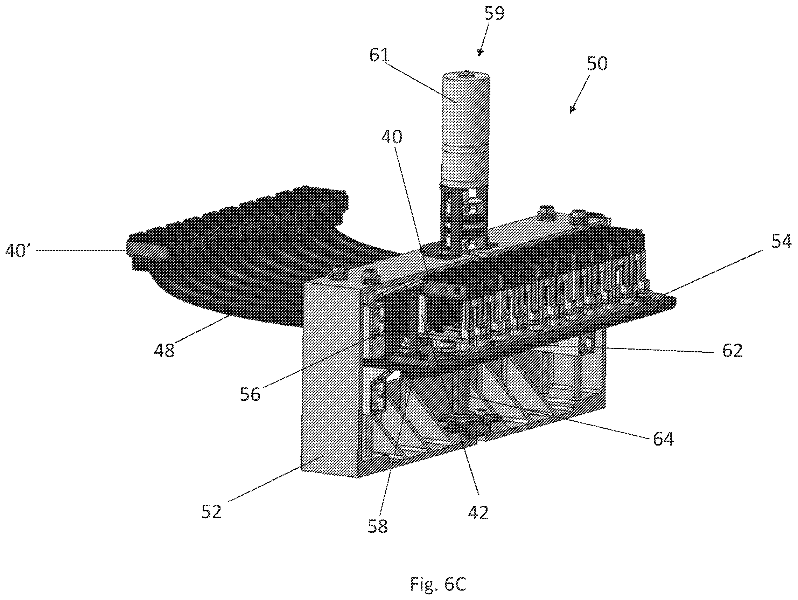

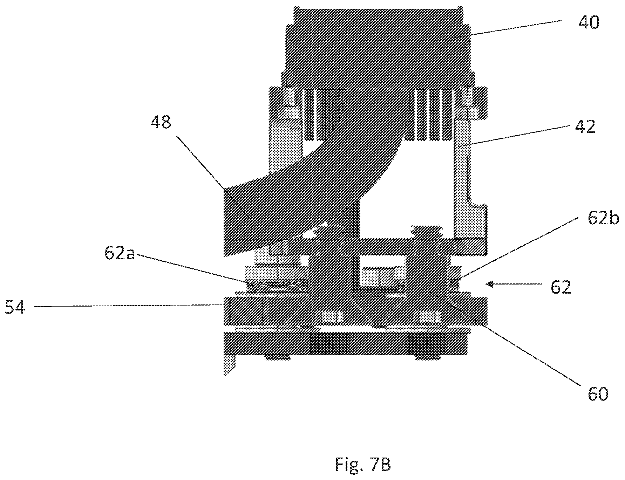

Figure 5 is a schematic perspective view of a connector 40 (e.g., a male connector) of a connection line (see Figures 6C and 7B) that is coupled to a holder 42. The connector 40 can be configured to align with and connect to the connector 24 of the interposer assembly 20 (see Figures 3 and 4). For example, the connector 40 can be inserted into the connector housing 25 of the interposer assembly 20. The other end of the connector 40 can be connected to a connection line (see Figures 6C and7B). In some embodiments, the connector 40 can remain connected to the holder 42 when the connector 40 is connected to the connector 24. In some other embodiments, the holder 42 can be configured such that when the connector 40 is connected to the connector 24, the connector 40 is disconnected from the holder 42.

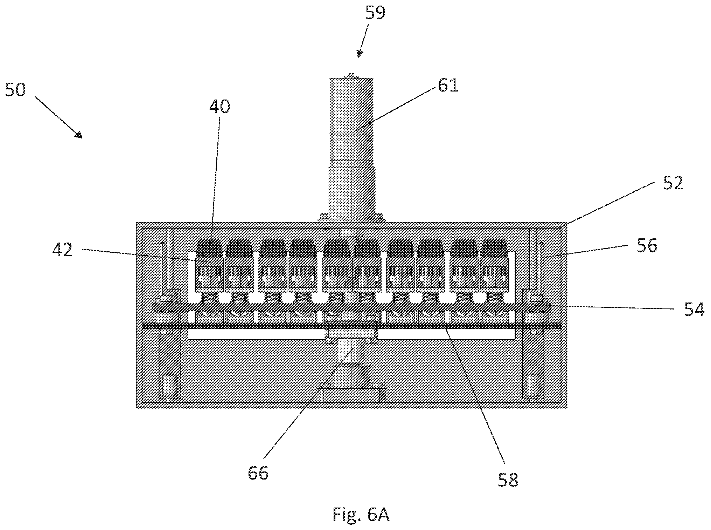

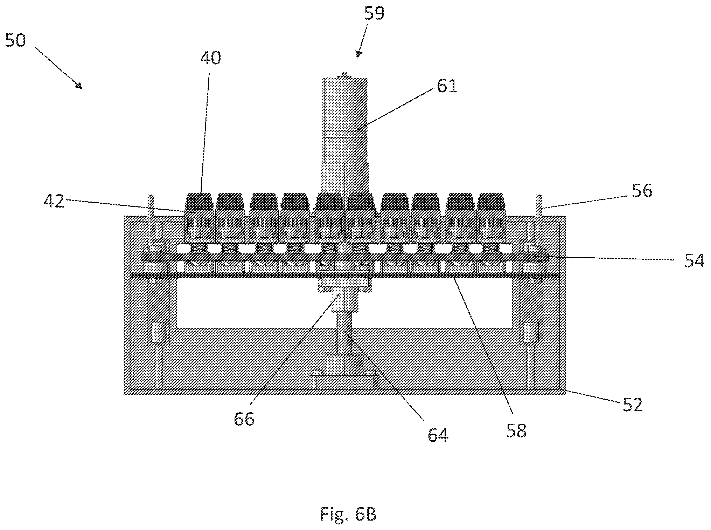

Figure 6A is a schematic side view of a connector system 50 that is fixed to a cabinet bracket 52 in a first state. Figure 6B is a schematic side view of the connector system 50 that is fixed to the cabinet bracket 52 in a second state different from the first state. Figure 6C is a schematic perspective view of the connector system 50 in the second state with a connection line 48. The connector system 50 will be discussed with reference to Figures 6A, 6B, and 6C. The connector system 50 can include a connector holder frame 54 to which a plurality of holders 42 can be coupled. The connector system 50 can comprise at least one alignment pin 56 that can generally align the connectors 40 with corresponding connectors 24 of the interposer assembly 20 (see Figures 3 and 4). The connector system 50 can include a support structure 58 that supports the connectors 40, the holder 42, the connector holder frame 54, and the alignment pin 56. An alignment adjustment structure 62 can be provided between the holder 42 and the connector holder frame 54. The alignment adjustment structure 62 comprises at least one spring.

Each holder 42 of an array of holders of the connector system 50 can be independently coupled to a respective alignment adjustment structure 62. Individual alignment adjustment structures 62 can independently compensate for different mismatches between connectors 24 and 40. This can advantageously address different misalignments between respective connector pairs when making several connections between connector pairs in an array.

One or more of the holders 42 of the array of holders may be positioned such that each connector 40 held by the one or more holders 42 is misaligned with the corresponding connector 24 of the interposer assembly 20, and misalignment is compensated by the alignment adjustment structure 62. This compensation can be applied differently across the array of alignment adjustment structures 62. The alignment adjustment structures 62 enable all the connectors 40 held by the array of holders 42 to be properly connected to corresponding connectors 24.

The connector system 50 can include an actuator 59. In some embodiments, the actuator 59 can comprise an elevator as illustrated. The actuator 59 can provide linear movement of the support structure 58. The actuator 59 can include a motor 61, a shaft 64, and a guide structure 66. In some embodiments, the shaft 64 can comprise a lead screw, and the guide structure 66 can comprise a lead nut. For example, the lead nut can comprise a split nut. The motor 61 can provide a rotational motion to the shaft 64, and the rotational motion can be converted into a vertical linear motion by way of the lead screw and the lead nut. In some embodiments, the lead screw and the lead nut can implement an Acme thread or a square thread. In the first state of the connector system 50 shown in Figure 6A, the support structure 58 is at a first height relative to a location of the cabinet bracket 52. In the second state of the connector system 50 shown in Figure 6B, the support structure 58 is at a second height that is higher than first height relative to the location of the cabinet bracket 52.

The connector 40 is provided at an end of a connection line 48 and the connector 40' is provided at the other end of the connection line 48. The connector 40' can be connected to, for example, another system that is the same as or generally similar to the processor system 10. In some embodiments, the connection line 48 can comprise a plurality of wires.

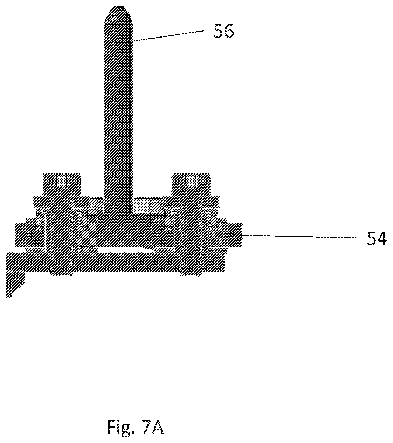

Figure 7A is a schematic side view of an alignment pin 56 that is coupled to the connector holder frame 54. The alignment pin 56 can be configured to insert into an alignment hole of a system (e.g., the processing system 10) that the connector 40 is configured to connected to. A skilled artisan will understand that the alignment pin 56 is an example alignment structure for aligning a system with another system, and such alignment structures can include an alignment hole or one or more other structures that can position the system at a particular location relative to the other system. In some embodiments, the alignment pin 56 can be configured to align the connector 40 with a corresponding connector 24 of a processing system 10 with an alignment tolerance in the horizontal plane (e.g., an x-y plane). The alignment tolerance in the horizontal plane is on the order of a millimeter. For example, the alignment pin 56 can reduce cabinet variation by around an order of magnitude.

Figure 7B is a schematic side view of the connector 40 coupled to the holder 42. The connector 40 is provided at an end of a connection line 48. The holder 42 is connected to the connector holder frame 54 by way of at least one fastener 60. A combination of the connector holder frame 54 and the fastener 60 defines a datum structure. In some embodiments, the fastener 60 can comprise a chamfer bolt. An alignment adjustment structure 62 can be provided between the holder 42 and the connector holder frame 54. The alignment adjustment structure 62 comprises at least one spring. Figure 7B shows a pair of springs 62a and 62b as an example of the alignment adjustment structure 62.

The alignment adjustment structure 62 can adjust alignment between the connectors 24, 40 for connecting to each other. The alignment adjustment structure 62 can enable a more accurate, precise, and/or reliable alignment between the connectors 24, 40 as compared to when only the alignment pin 56 is used. In some embodiments, the alignment adjustment structure 62 is configured to compensate for the misalignment between the connectors 24, 40 so that the connectors 24, 40 are aligned within an alignment tolerance. In some embodiments, the alignment adjustment structure 62 can be configured to align the connector 40 with a corresponding connector 24 of a processing system 10 with an alignment tolerance in the horizontal plane (e.g., an x-y plane) on the order of 0.1mm. For example, the alignment adjustment structure 62 and the alignment pin 56 can together reduce cabinet variation by around two orders of magnitude.

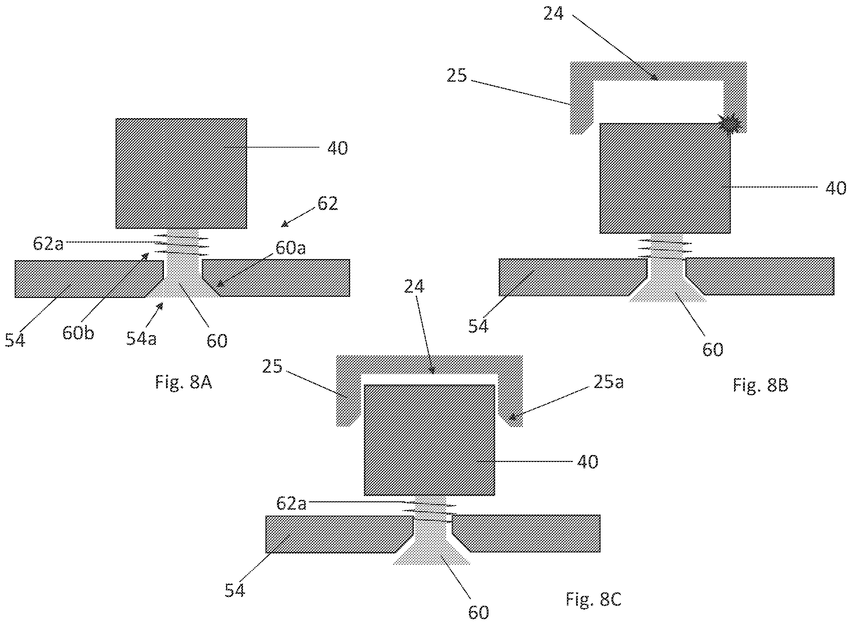

Figures 8A-8C show various steps in a method of connecting a connector 40 attached to a connection line 48 (see Figure 7B) to a corresponding connector 24. Figure 8A is a schematic cross sectional side view of a connector 40 coupled to the connector holder frame 54 by way of a fastener 60. A combination of the connector holder frame 54 and the fastener 60 defines a datum structure. An alignment adjustment structure 62 (e.g., a spring 62a) is provided between the connector 40 and the connector holder frame 54.

As shown in Figure 8B, the connector 40 and the connector 24 may be misaligned such that a portion of the connector 40 collides with a connector housing 25 of the connector 24. The spring 62a can enable the fastener 60 to move vertically causing datum release between the connector holder frame 54 and the fastener 60 so as to allow the fastener 60 and the connector 40 to move in a horizontal direction. The fastener 60 can include a slanted head portion 60a and a shank portion 60b. In some embodiments, the shank portion 60b can be narrower than an opening 54a of the connector holder frame 54, to which the shank portion 60b is disposed, to allow the horizontal movement.

The connector housing 25 can guide the connector 40 to connect to the connector 24. As illustrated, the connector housing 25 can comprise a guiding structure 25a to facilitate position adjustment of the positions between the corresponding connectors 24, 40. The position of the connector 40 of the connection line 48 can be adjusted to align with the connector 24 of the processor system 10. Thus, the alignment adjustment structure 62 can provide the connector 40 to float in the horizontal direction and compress in the vertical direction to enable proper alignment between the corresponding connectors 24, 40, as shown in Figure 8C.

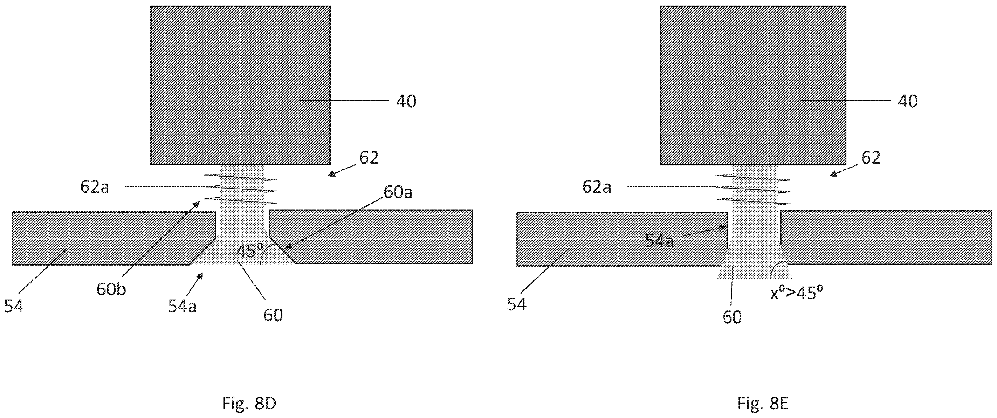

Figures 8D and 8E show examples of a datum structure (e.g., the connector holder frame 54 and the fastener 60). The fastener 60 illustrated in Figure 8D has a slanted head portion 60a that has a slant angle of 45°. The fastener 60 illustrated in Figure 8E has a slanted head portion 60a that has a slant angle of x° greater than 45°. In some embodiments, the opening 54a of the connector holder frame 54 can be shaped so as to mate with the shape of the fastener 60. When the slant angle of the slanted head portion 60a is greater, the datum structure provides more rapid horizontal gap release as compared to a shallower angle.

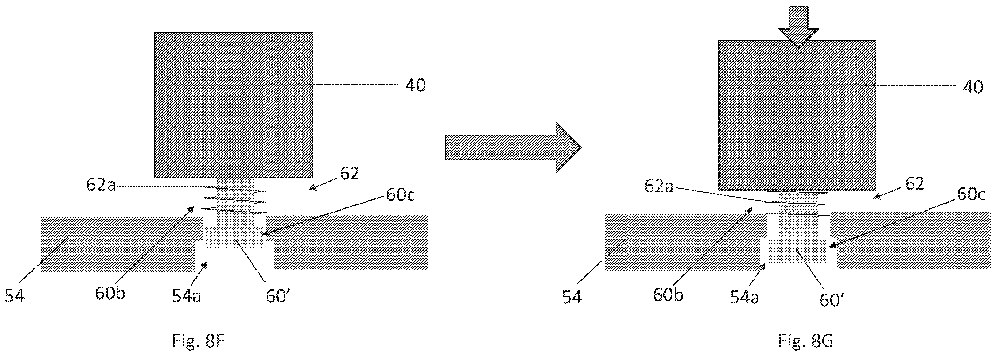

Figures 8F and 8G show another example of a datum structure (e.g., the connector holder frame 54 and a fastener 60'). The fastener 60' illustrated in Figures 8F and 8G has a shank portion 60b and a stepped head portion 60c. The stepped head portion 60c can lock a horizontal movement of the connector 40 in a first state as shown in Figure 8F. When downward force is applied to the connector 40 in a vertical direction, the stepped head portion 60c can move in the vertical direction accordingly, causing datum release between the connector holder frame 54 and the fastener 60 thereby enabling horizontal movement of the connector 40. The spring 62a is compressed when the downward force is applied to the connector 40. The spring 62a is biased to maintain sufficient upward force for the connector 40 to be coupled with the connector 24 (see Figure 8B).

The connector holder frame 54 and the fastener 60 can have any other suitable shape for allowing datum release between the connector holder frame 54 and the fastener 60 when there is a vertical movement of the connector 40.

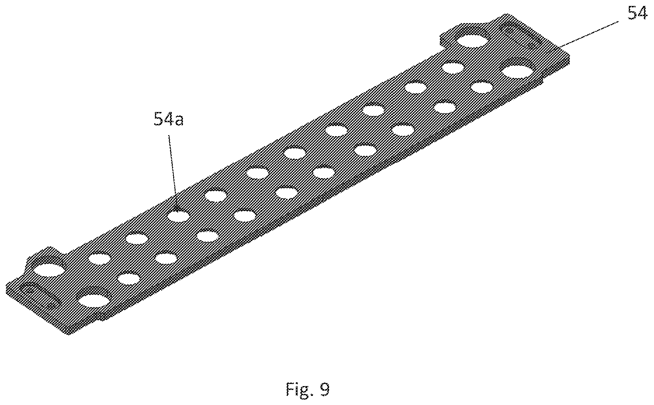

Figure 9 is a schematic perspective view of the connector holder frame 54. The connector holder frame 54 can have one or more openings 54a configured to receive a fastener 60. In some embodiments, there can be two openings 54a for each holder 42. The one or more openings 54a and the connector frame 54 can be implemented in accordance with any suitable principles and advantages discussed with reference to Figures 8A-8E.

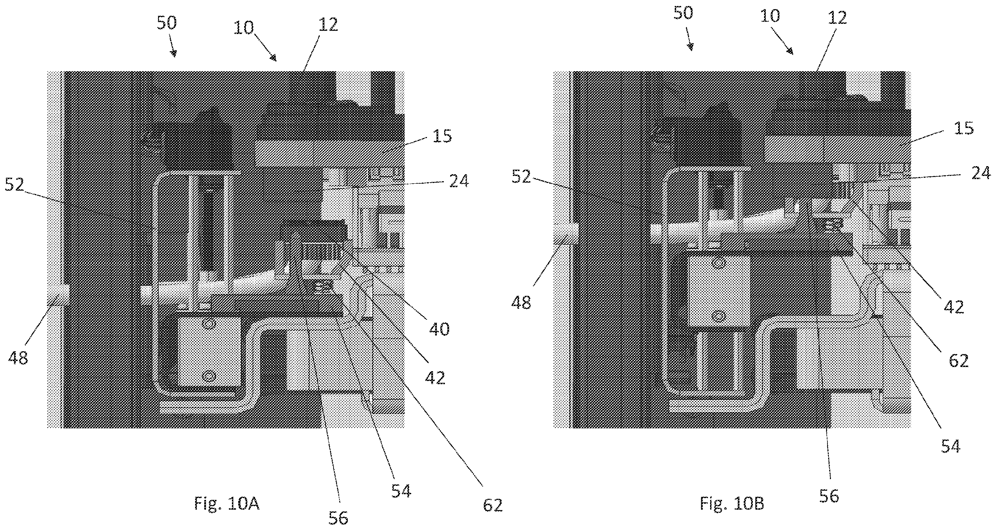

Figure 10A shows a connector system 50 and a processor system 10 prior to connecting a connector 40 of a connection line 48 to a connector 24 of the processor system 10. Figure 10B shows the connector system 50 and the processor system 10 after connecting the connector 40 of the connection line 48 to the connector 24 of the processor system 10. The connector system 50 utilizes an alignment pin 56 and an alignment adjustment structure 62.

The space may be tight on the interposer assembly 20. As disclosed herein, special tools can help to grab connectors for insertion to the connector or socket, and to help unlatch the locking mechanism for unplugging the connectors. Such tools make it possible to disconnect and service multiple connectors in one action.

In various embodiments disclosed herein, the individual component of a cabinet can be synchronized in a manner to facilitate group functionality. Control algorithms may also be incorporated to account for individual performance of the actuation of each individual actuator. Each cabinet can include an individual controller. Alternatively, a plurality of cabinets can be controlled by a single component function or module.

Subsequent to coarse adjustment, fine alignment can be achieved using an alignment adjustment structure 62 (e.g., a conical fastener with a spring). The spring force (e.g., of the spring 62a, 62b) or elasticity can provide a greater force proportional to the misalignment error in the adjustment. In one example, a pin that is not misaligned will not generate significant reactive force from the fine adjustment. In another example, a pin that is more substantially misaligned will generate greater force due to the pressure on the conical shaped guide and the spring. In one embodiment, a conical fastener may be associated with individual connectors. Such embodiments can facilitate the self-adjustment of individual connectors for unbalanced connections or non-heterogenous forces. Alternatively, the number of conical connectors can be selected based on the amount of self-adjustment desired. The spring-loaded conical connectors also provide upward force to maintain connectivity of the components.

An array of connectors 40 of connection lines 48 can be connected to a corresponding array of connectors 24 of a processor system 10. The principles and advantages disclosed herein can enable precise alignment and/or reliable connection between the connectors 40 and the connectors 24. In some embodiments, a first alignment structure (e.g., the alignment pin 56) can generally align the connectors 40 with corresponding connectors 24, and a second alignment structure (e.g., the alignment adjustment structure 62) can provide more precise alignment. Without the alignment adjustment structure 62, when one or more connectors 40 can be misaligned relative to corresponding connector(s) 24, the misaligned connectors 40, 24 may not be connected. The alignment adjustment structure 62 can enable the misaligned connectors 40 to adjust the positions individually, thereby providing connections between the misaligned connectors 40, 24 without shifting other connectors 40.

The actuator 59 can comprise a non-backdrivable actuator. A backdrivable actuator can be an actuator that, when force in a direction opposite to an actuation direction, the actuator reverses its motion. When a backdrivable actuator is not powered on or in an disabled mode, the actuator may freely move in either direction by an external force. For example, a shaft of an unpowered electric motor can spin clockwise or counter-clockwise based external force (external torque). Various embodiments of the alignment adjustment structure 62 disclosed herein can be used in combination with a non-backdrivable actuator can enable sufficient force to be applied to the connector 40. In some embodiments, use of a low lead Acme threaded rod for the shaft 64, and a low lead nut (e.g., a split nut) for the guide structure 66 can configure the actuator 59 to be a non-backdrivable actuator. In some embodiments, the actuator or actuator 59 can comprise a spring-loaded backdrivable actuator.

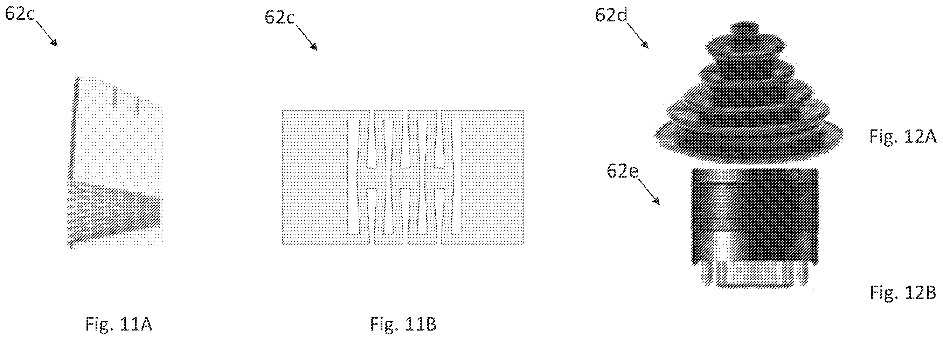

Although alignment adjustment structures 62 may be discussed with reference to springs, alignment adjustment structures 62 can be implemented in a variety of different ways. In further embodiments, as shown in Figures 11A, 11B, 12A and 12B, the alignment adjustment structure 62 may comprise elastic rubber pyramids or flexible arms cut into metal cable holders could achieve the same or generally similar functions as the spring 62a, 62b. Figure 11A shows a view of a flexure 62c (e.g., a lattice fringe structure) as an example of the alignment adjustment structure 62. Figure 11B shows a schematic plan view of the flexure 62c. Figure 12A is a schematic perspective view of an elastic pyramid 62d as an example of the alignment adjustment structure 62. Figure 12B is a schematic side view of an elastic cylinder as an example of the alignment adjustment structure 62. In some other embodiments, the alignment adjustment structure 62 can comprise any suitable structure and/or material that is compressible along a first axis and movable along a plane non-parallel to the first axis (e.g., perpendicular) or a second axis different from (e.g., perpendicular to) the first axis.

Various embodiments of a connector system disclosed herein can be used to couple two or more systems of different cabinets. For example, a connector system in accordance with various embodiments disclosed herein can be used to provide connection between a first system on wafer (SoW) assembly of a first cabinet and a second SoW assembly of a second cabinet by way of a connection line. Each of these cabinets can include an array of SoW assemblies within a common housing.

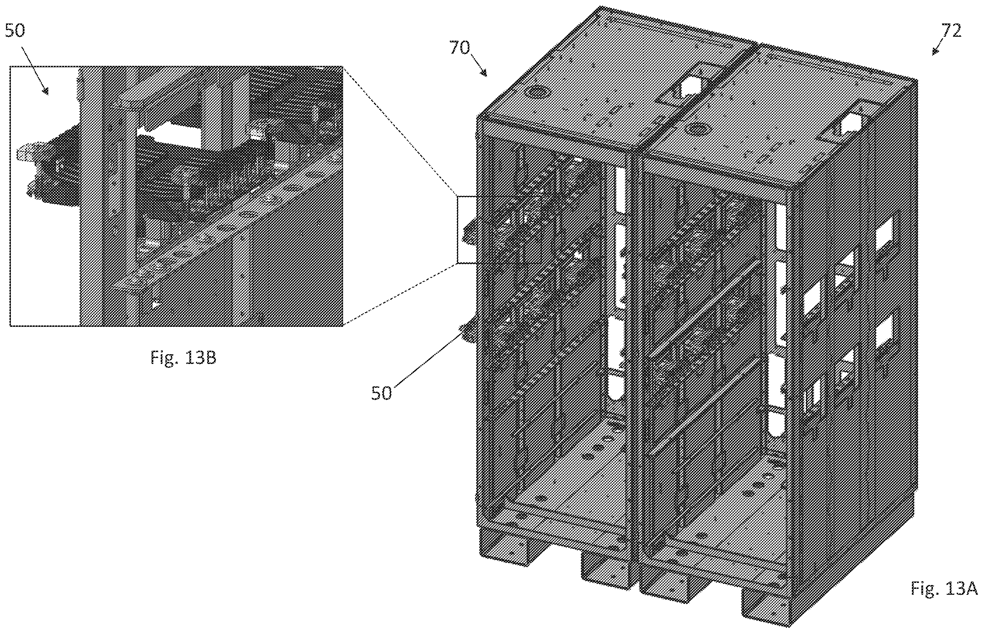

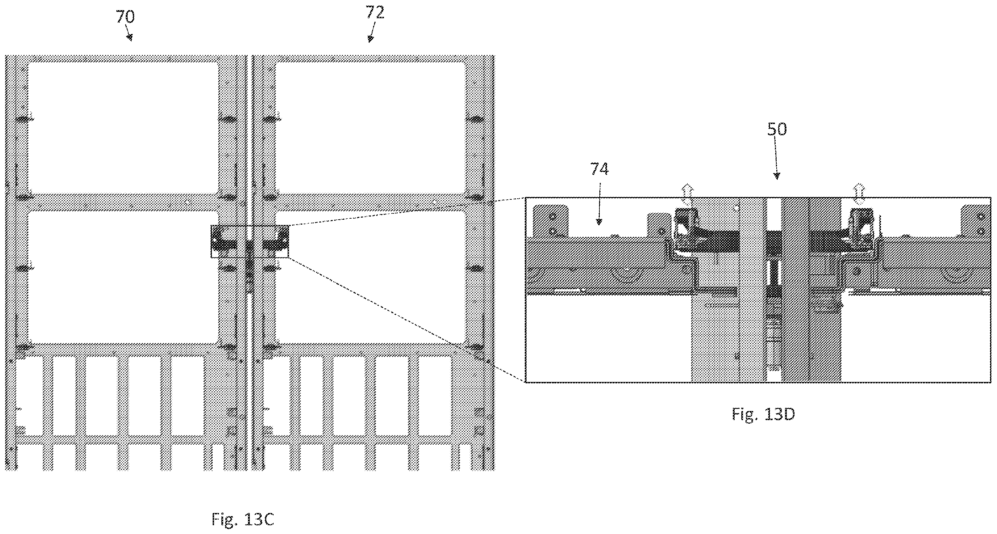

Figure 13A shows a schematic perspective view of a first cabinet 70 and a second cabinet 72 with a plurality of connector systems 50. Figure 13B shows an enlarged view of a portion of Figure 13A. Figure 13C is a schematic side view of the first and second cabinets 70, 72. Figure 13D is an enlarged view of a portion of Figure 13C with a support rack 74 illustrated therein. Though not illustrated for simplicity in Figures 13A-13D, each of the first and second cabinets 70, 72 can include a plurality of SoW assemblies (e.g., the processor system 10 shown in Figure 1) mounted thereon. The support rack 74 can support the SoW assembly. In some embodiments, each of the first and second cabinets 70, 72 can include rows and columns of SoW assemblies. When the Sow assemblies are installed, connectors of the SoW assemblies may not be accessible by hand. The connector systems disclosed herein can connect and/or disconnect two or more SoW assemblies without a human physically present at the connection site. Without the connector system 50, the first and second cabinets 70, 72 may need to be disassembled and/or moved to service the connections between two or more SoW assemblies.

As shown in Figures 13A-13D, the connector system 50 can provide connection between a first SoW assembly of the first cabinet 70 and a second SoW assembly of the second cabinet 72 across the cabinet wall(s). The connector system 50 disclosed herein can enable the connection between the two or more SoW assemblies to be serviced without disassembling the first and second cabinets 70, 72.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments.

The foregoing description has been described with reference to specific embodiments. However, the illustrative discussions above are not intended to be exhaustive or to limit the inventions to the precise forms described. Many modifications and variations are possible in view of the above teachings. Others skilled in the art are thereby enabled to best utilize the techniques and various embodiments with various modifications as suited to various uses.

Although the disclosure and examples have been described with reference to the accompanying drawings, various changes and modifications will become apparent to those skilled in the art that fall into the scope of the appended claims.

## Claims

1. A connector system (50) comprising:
a support structure (58);
a holder (42) configured to receive a first connector of a connection line (48), the holder (42) coupled to the support structure (58);
a first alignment structure configured to provide alignment between the first connector and a second connector of a processing system (10) with an alignment tolerance on an order of a millimeter;
an alignment adjustment structure (62) comprising a spring, the alignment adjustment structure configured to compensate for the alignment tolerance between the first connector and the second connector, the alignment adjustment structure (62) compressible along a first axis and movable along a second axis different from the first axis, the alignment adjustment structure (62) positioned between the support structure (58) and the holder (42);
a datum structure including a fastener positioned in an opening of a frame supported by the support structure, the fastener coupling the frame with the holder, wherein the fastener comprises a slanted or stepped head portion and a shank portion, the shank portion extending into the spring such that the shank portion is partially surrounded by the spring, the spring configured to release datum of the datum structure in response to being compressed along the first axis; and
an actuator (59) configured to provide movement of the holder (42) so as to connect the first connector to the second connector of the processing system (10).

2. The connector system (50) of Claim 1, wherein the second axis is substantially perpendicular to the first axis.

3. The connector system (50) of Claim 1, wherein the alignment adjustment structure (62) is movable along a plane parallel with the second axis.

4. The connector system (50) of Claim 1, wherein the connector system (50) comprises:
an array of holders (42) including the holder (42); and
an array of alignment adjustment structures (62) including the alignment adjustment structure (62), wherein each alignment adjustment structure (62) of the array of alignment adjustment structures (62) is associated with a respective holder (42) of the array of holders (42).

5. The connector system (50) of Claim 1, further comprising a second holder configured to receive a third connector of a second connection line, the second holder coupled and positioned onto the support structure (58), and the actuator (59) configured to provide movement of the second holder so as to connect the second connector to a fourth connector of the processing system (10).

6. The connector system (50) of Claim 1, wherein the first alignment structure comprises an alignment pin.

7. A multi-cabinet computing system comprising:
first cabinet (70) comprising a first plurality of processing systems (10) including a first processing system;
a second cabinet (72) comprising a second plurality of processing systems (10) including a second processing system; and
a connector system (50) of one of the preceding claims configured to connect the first processing system and the second processing system by way of a plurality of connection lines.

8. The multi-cabinet computing system of Claim 7, wherein the first processing system comprises a system (10, 18, 50) on wafer (SoW) assembly.

9. The multi-cabinet computing system of Claim 7, wherein the first and second processing systems are included in a distributed processing system (10) that is configured to perform neural network training.

10. A method of connecting a first computing system of a first cabinet (70) and a second computing system of a second cabinet (72) through a connection line (48), the method comprising:
providing a first connector system holding a first connector of the connection line (48); and
actuating the first connector system to connect the first connector of the connection line (48) to a second connector of the first computing system of the first cabinet (70),
wherein the first connector system comprises:
a support structure;
a connector holder that holds the first connector of the connection line (48) and is coupled to a frame (54),
a first alignment structure providing alignment between the first connector and the second connector of a processing system (10) with an alignment tolerance on an order of a millimeter,
an alignment adjustment structure (62) between the connector holder and the frame (54), the alignment adjustment structure (62) comprising a spring, the alignment adjustment structure compensating for the alignment tolerance between the first connector and the second connector, and
a datum structure including a fastener positioned in an opening of a frame supported by the support structure, the fastener coupling the frame with the connector holder, wherein the fastener comprises a slanted or stepped head portion and a shank portion, the shank portion extending into the spring such that the shank portion is partially surrounded by the spring, the spring configured to release datum of the datum structure in response to being compressed along a first axis; and
wherein said actuating causes the alignment adjustment structure (62) to compress along the first axis and move the connector holder (42) along a second axis different from the first axis.

11. The method of Claim 10, further comprising:
providing a second connector system holding a third connector of the connection line (48); and
actuating a second connector system to connect the third connector of the connection line (48) to a fourth connector of the second computing system of the second cabinet (72).

## Patentansprüche

1. Steckverbindersystem (50), das Folgendes aufweist:
eine Trägerstruktur (58);
eine Halterung (42), die dazu konfiguriert ist, einen ersten Steckverbinder einer Verbindungsleitung (48) aufzunehmen, wobei die Halterung (42) mit der Trägerstruktur (58) gekoppelt ist;
eine erste Ausrichtungsstruktur, die dazu konfiguriert ist, eine Ausrichtung zwischen dem ersten Steckverbinder und einem zweiten Steckverbinder eines Verarbeitungssystems (10) mit einer Ausrichtungstoleranz in einer Größenordnung von einem Millimeter bereitzustellen;
eine Ausrichtungseinstellstruktur (62), die eine Feder umfasst, wobei die Ausrichtungseinstellstruktur dazu konfiguriert ist, die Ausrichtungstoleranz zwischen dem ersten Steckverbinder und dem zweiten Steckverbinder auszugleichen, wobei die Ausrichtungseinstellstruktur (62) entlang einer ersten Achse komprimierbar und entlang einer von der ersten Achse verschiedenen zweiten Achse bewegbar ist, wobei die Ausrichtungseinstellstruktur (62) zwischen der Trägerstruktur (58) und der Halterung (42) positioniert ist;
eine Bezugsstruktur, die ein Befestigungselement aufweist, das in einer Öffnung eines von der Trägerstruktur getragenen Rahmens positioniert ist, wobei das Befestigungselement den Rahmen mit der Halterung koppelt, wobei das Befestigungselement einen schrägen oder abgestuften Kopfabschnitt und einen Schaftabschnitt aufweist, wobei sich der Schaftabschnitt derart in die Feder erstreckt, dass der Schaftabschnitt teilweise von der Feder umgeben ist, wobei die Feder dazu konfiguriert ist, den Bezugspunkt der Bezugsstruktur in Ansprechen darauf freizugeben, dass sie entlang der ersten Achse komprimiert wird; und
ein Stellglied (59), das dazu konfiguriert ist, eine Bewegung der Halterung (42) bereitzustellen, um den ersten Steckverbinder mit dem zweiten Steckverbinder des Verarbeitungssystems (10) zu verbinden.

2. Steckverbindersystem (50) nach Anspruch 1, wobei die zweite Achse im Wesentlichen senkrecht zur ersten Achse verläuft.

3. Steckverbindersystem (50) nach Anspruch 1, wobei die Ausrichtungseinstellstruktur (62) entlang einer Ebene bewegbar ist, die parallel zur zweiten Achse verläuft.

4. Steckverbindersystem (50) nach Anspruch 1, wobei das Steckverbindersystem (50) Folgendes aufweist:
eine Anordnung von Halterungen (42), die die Halterung (42) enthält; und
eine Anordnung von Ausrichtungseinstellstrukturen (62), die die Ausrichtungseinstellstruktur (62) enthält, wobei jede Ausrichtungseinstellstruktur (62) der Anordnung von Ausrichtungseinstellstrukturen (62) einer jeweiligen Halterung (42) der Anordnung von Halterungen (42) zugeordnet ist.

5. Steckverbindersystem (50) nach Anspruch 1, das ferner eine zweite Halterung aufweist,
die dazu konfiguriert ist, einen dritten Steckverbinder einer zweiten Verbindungsleitung aufzunehmen, wobei die zweite Halterung mit der Trägerstruktur (58) gekoppelt und auf dieser positioniert ist, und wobei das Stellglied (59) dazu konfiguriert ist, eine Bewegung der zweiten Halterung bereitzustellen, um den zweiten Steckverbinder mit einem vierten Steckverbinder des Verarbeitungssystems (10) zu verbinden.

6. Steckverbindersystem (50) nach Anspruch 1, wobei die erste Ausrichtungsstruktur einen Ausrichtungsstift aufweist.

7. Mehrschrank-Rechnersystem, das Folgendes aufweist:
einen ersten Schrank (70), der eine erste Mehrzahl von Verarbeitungssystemen (10) einschließlich eines ersten Verarbeitungssystems aufweist;
einen zweiten Schrank (72), der eine zweite Mehrzahl von Verarbeitungssystemen (10) einschließlich eines zweiten Verarbeitungssystems aufweist; und
ein Steckverbindersystem (50) nach einem der vorhergehenden Ansprüche, das dazu konfiguriert ist, das erste Verarbeitungssystem und das zweite Verarbeitungssystem über eine Mehrzahl von Verbindungsleitungen zu verbinden.

8. Mehrschrank-Rechnersystem nach Anspruch 7, wobei das erste Verarbeitungssystem eine System-on-Wafer-Baugruppe (SoW-Baugruppe) (10, 18, 50) aufweist.

9. Mehrschrank-Rechnersystem nach Anspruch 7, wobei das erste und das zweite Verarbeitungssystem in einem verteilten Verarbeitungssystem (10) enthalten sind, das dazu konfiguriert ist, ein Training neuronaler Netzwerke durchzuführen.

10. Verfahren zum Verbinden eines ersten Rechnersystems eines ersten Schranks (70) und eines zweiten Rechnersystems eines zweiten Schranks (72) über eine Verbindungsleitung (48), wobei das Verfahren Folgendes umfasst:
Bereitstellen eines ersten Steckverbindersystems, das einen ersten Steckverbinder der Verbindungsleitung (48) aufnimmt; und
Betätigen des ersten Steckverbindersystems, um den ersten Steckverbinder der Verbindungsleitung (48) mit einem zweiten Steckverbinder des ersten Rechnersystems des ersten Schranks (70) zu verbinden,
wobei das erste Steckverbindersystem Folgendes aufweist:
eine Trägerstruktur;
eine Steckverbinderhalterung, die den ersten Steckverbinder der Verbindungsleitung (48) aufnimmt und mit einem Rahmen (54) gekoppelt ist,
eine erste Ausrichtungsstruktur, die eine Ausrichtung zwischen dem ersten Steckverbinder und dem zweiten Steckverbinder eines Verarbeitungssystems (10) mit einer Ausrichtungstoleranz in einer Größenordnung von einem Millimeter bereitstellt,
eine Ausrichtungseinstellstruktur (62) zwischen der ersten Steckverbinderhalterung und dem Rahmen (54), wobei die Ausrichtungseinstellstruktur (62) eine Feder aufweist,
wobei die Ausrichtungseinstellstruktur die Ausrichtungstoleranz zwischen dem ersten Steckverbinder und dem zweiten Steckverbinder ausgleicht, und
eine Bezugsstruktur, die ein Befestigungselement aufweist, das in einer Öffnung eines von der Trägerstruktur getragenen Rahmens positioniert ist, wobei das Befestigungselement den Rahmen mit der Steckverbinderhalterung koppelt, wobei das Befestigungselement einen schrägen oder abgestuften Kopfabschnitt und einen Schaftabschnitt aufweist, wobei sich der Schaftabschnitt derart in die Feder erstreckt, dass der Schaftabschnitt teilweise von der Feder umgeben ist, wobei die Feder dazu konfiguriert ist, den Bezugspunkt der Bezugsstruktur in Ansprechen darauf freizugeben, dass sie entlang einer ersten Achse komprimiert wird; und
wobei das Betätigen veranlasst, dass sich die Ausrichtungseinstellstruktur (62) entlang der ersten Achse komprimiert und die Steckverbinderhalterung (42) entlang einer von der ersten Achse verschiedenen zweiten Achse bewegt.

11. Verfahren nach Anspruch 10, das ferner Folgendes umfasst:
Bereitstellen eines zweiten Steckverbindersystems, das einen dritten Steckverbinder der Verbindungsleitung (48) aufnimmt; und
Betätigen eines zweiten Steckverbindersystems, um den dritten Steckverbinder der Verbindungsleitung (48) mit einem vierten Steckverbinder des zweiten Rechnersystems des zweiten Schranks (72) zu verbinden.

## Revendications

1. Système de connecteur (50) comprenant :
une structure de support (58) ;
un support (42) configuré pour recevoir un premier connecteur d'une ligne de connexion (48), le support (42) étant couplé à la structure de support (58) ;
une première structure d'alignement configurée pour assurer l'alignement entre le premier connecteur et un second connecteur d'un système de traitement (10) avec une tolérance d'alignement de l'ordre du millimètre ;
une structure de réglage d'alignement (62) comprenant un ressort, la structure de réglage d'alignement étant configurée pour compenser la tolérance d'alignement entre le premier connecteur et le second connecteur, la structure de réglage d'alignement (62) étant compressible le long d'un premier axe et mobile le long d'un second axe différent du premier axe, la structure de réglage d'alignement (62) étant positionnée entre la structure de support (58) et le support (42) ;
une structure de référence comprenant un élément de fixation positionné dans une ouverture d'un cadre supporté par la structure de support, l'élément de fixation couplant le cadre avec le support, lequel élément de fixation comprend une partie de tête inclinée ou étagée et une partie de tige, la partie de tige s'étendant dans le ressort de sorte que la partie de tige est partiellement entourée par le ressort, le ressort étant configuré pour libérer la référence de la structure de référence en réponse à une compression le long du premier axe ;
et un actionneur (59) configuré pour permettre le mouvement du support (42) de manière à connecter le premier connecteur au second connecteur du système de traitement (10).

2. Système de connecteur (50) selon la revendication 1, lequel second axe est sensiblement perpendiculaire au premier axe.

3. Système de connecteur (50) selon la revendication 1, lequel structure de réglage d'alignement (62) est mobile le long d'un plan parallèle au second axe.

4. Système de connecteur (50) selon la revendication 1, lequel système de connecteur (50) comprend :
un ensemble de supports (42) comprenant le support (42) ; et
un ensemble de structures de réglage d'alignement (62) comprenant la structure de réglage d'alignement (62), chaque structure de réglage d'alignement (62) de l'ensemble de structures de réglage d'alignement (62) étant associée à un support (42) respectif de l'ensemble de supports (42).

5. Système de connecteur (50) selon la revendication 1, comprenant en outre un second support configuré pour recevoir un troisième connecteur d'une seconde ligne de connexion, le second support étant couplé et positionné sur la structure de support (58), et l'actionneur (59) étant configuré pour permettre le mouvement du second support de manière à connecter le second connecteur à un quatrième connecteur du système de traitement (10).

6. Système de connecteur (50) selon la revendication 1, lequel première structure d'alignement comprend une broche d'alignement.

7. Système informatique multi-armoire comprenant :
une première armoire (70) comprenant une première pluralité de systèmes de traitement (10) comprenant un premier système de traitement ;
une seconde armoire (72) comprenant une seconde pluralité de systèmes de traitement (10) comprenant un second système de traitement ; et
un système de connecteur (50) selon l'une quelconque des revendications précédentes, configuré pour connecter le premier système de traitement et le second système de traitement au moyen d'une pluralité de lignes de connexion.

8. Système informatique multi-armoire selon la revendication 7, lequel premier système de traitement comprend un assemblage système sur tranche (SoW) (10, 18, 50).

9. Système informatique multi-armoire selon la revendication 7, lequel premier et second système de traitement sont inclus dans un système de traitement distribué (10) qui est configuré pour effectuer un entraînement de réseau de neurones.

10. Procédé de connexion d'un premier système informatique d'une première armoire (70) et d'un second système informatique d'une seconde armoire (72) par l'intermédiaire d'une ligne de connexion (48), le procédé comprenant :
la fourniture d'un premier système de connecteur maintenant un premier connecteur de la ligne de connexion (48) ; et
l'actionnement du premier système de connecteur pour connecter le premier connecteur de la ligne de connexion (48) à un second connecteur du premier système informatique de la première armoire (70),
lequel premier système de connecteur comprend :
une structure de support ;
un support de connecteur qui maintient le premier connecteur de la ligne de connexion (48) et qui est couplé à un cadre (54),
une première structure d'alignement assurant l'alignement entre le premier connecteur et le second connecteur d'un système de traitement (10) avec une tolérance d'alignement de l'ordre du millimètre,
une structure de réglage d'alignement (62) entre le support de connecteur et le cadre (54), la structure de réglage d'alignement (62) comprenant un ressort, la structure de réglage d'alignement compensant la tolérance d'alignement entre le premier connecteur et le second connecteur, et
une structure de référence comprenant un élément de fixation positionné dans une ouverture d'un cadre supporté par la structure de support, l'élément de fixation couplant le cadre avec le support de connecteur, lequel élément de fixation comprend une partie de tête inclinée ou étagée et une partie de tige, la partie de tige s'étendant dans le ressort de sorte que la partie de tige est partiellement entourée par le ressort, le ressort étant configuré pour libérer la référence de la structure de référence en réponse à une compression le long d'un premier axe ; et
dans lequel l'actionnement provoque la compression de la structure de réglage d'alignement (62) le long du premier axe et le déplacement du support de connecteur (42) le long d'un second axe différent du premier axe.

11. Procédé selon la revendication 10, comprenant en outre :
la fourniture d'un second système de connecteur maintenant un troisième connecteur de la ligne de connexion (48) ; et
l'actionnement d'un second système de connecteur pour connecter le troisième connecteur de la ligne de connexion (48) à un quatrième connecteur du second système informatique de la seconde armoire (72).
